# EUROPEAN PATENT APPLICATION

(11) **EP 4 737 860 A1**
(43) Date of publication of application: **06.05.2026**
(21) Application number: 25207037.0
(22) Date of filing: 06.10.2025
(51) Int. Cl.: G01C 21/36, G08G 1/09, G08G 5/72

(54) **METHODS AND SYSTEMS FOR VEHICLE PASSING ASSISTANCE**

(30) Priority: 29.10.2024 IN 202411082707; 02.01.2025 US 202519008068
(71) Applicant: Honeywell International Inc., Charlotte, NC 28202 (US)
(72) Inventor: SAMUTHIRAPANDIAN, Subash, Charlotte, 28202 (US); HEINE, Christopher, Charlotte, 28202 (US); MANGIPUDI, Ramani, Charlotte, 28202 (US)
(74) Representative: Ingrassia, Fisher & Lorenz UK Ltd.

(57) **Abstract**

Aircraft systems and methods are provided for assisting operation of an aircraft utilizing a passing corridor to overtake another aircraft. One method involves providing, on a display device, a graphical user interface (GUI) display including a graphical representation of a planned route of travel and a second graphical representation of the vehicle operating in the passing corridor adjacent to the route corridor corresponding to the planned route of travel, identifying a merge location within the passing corridor for returning to the planned route of travel within the route corridor based on the relative speed difference and respective location associated with another vehicle operating in the route corridor, and providing a graphical indication of the merge location within the passing corridor on the GUI display on the display device.

## Description

### CROSS REFERENCE TO RELATED APPLICATION

This application claims priority to India Provisional Patent Application No. 202411082707, filed October 29, 2024, the entire content of which is incorporated by reference herein.

### TECHNICAL FIELD

The subject matter described herein relates generally to vehicle systems, and more particularly, embodiments of the subject matter relate to aircraft systems and related displays for assisting pilots and other operators passing other traffic.

### BACKGROUND

Aircraft are typically operated in accordance with predefined routes or procedures, particularly in the vicinity of an airport or within other congested airspaces. Air traffic control (ATC) is typically responsible for managing traffic flow using these predefined routes or procedures and instructing aircraft to deviate from a particular route or procedure to achieve desired separation distances, aircraft sequencing, resolve potential conflicts between aircraft, and/or the like. For example, the ATC may instruct an aircraft to execute a holding procedure or otherwise fly a holding pattern to delay a particular aircraft. As another example, radar vectoring may be utilized by ATC for separation, safety, or other reasons.

Urban air mobility (UAM) vehicles and other aircraft have the potential for a new mode of transportation for public use within cities or other urban areas, which could alleviate ground traffic congestion issues and be advantageous for different industries or applications (e.g., emergency services, medical transport, air taxis, public transport, and/or the like). In anticipation of various different types of UAM vehicles operating in an urban area, governments and regulatory agencies are defining airspace corridors and corresponding protocols or procedures to facilitate safe operation in urban areas. Due to the presence of skyscrapers, towers, and other buildings or obstacles, the number of potential corridors or airways for operation in an urban area may be limited. As a result, increasing utilization of UAM vehicles is likely to correspondingly increase UAM traffic density and may potentially deter or reduce the efficiency of different missions (e.g., when air traffic and attendant separation requirements limits speed or available airways or route corridors). Accordingly, it is desirable to provide methods and systems for assisting a pilot or other operator of a UAM vehicle passing other UAM vehicles or otherwise navigating UAM traffic within predefined corridors. Other desirable features and characteristics will become apparent from the subsequent detailed description and the appended claims, taken in conjunction with the accompanying drawings and this background.

### BRIEF SUMMARY

Systems and methods are provided for assisting operation of an aircraft or other vehicle utilizing a passing corridor to overtake another aircraft or vehicle. One exemplary method involves providing, on a display device, a graphical user interface (GUI) display including a first graphical representation of a planned route of travel for the vehicle and a second graphical representation of the vehicle operating in a passing corridor adjacent to a route corridor encompassing at least a portion of the planned route of travel, identifying a merge location within the passing corridor for returning to the planned route of travel within the route corridor based at least in part on a relationship between a first location of the vehicle within the passing corridor and a second location of a second vehicle within the route corridor, and providing, on the GUI display on the display device, a graphical indication of the merge location within the passing corridor.

In another embodiment, a method is provided for assisting operation of an aircraft operating in at least one of a route corridor and a passing corridor adjacent to the route corridor, wherein the route corridor encompasses at least a portion of a flight plan of the aircraft. The method involves providing, on a display device, a GUI display comprising a first graphical representation of the flight plan for the aircraft and a second graphical representation of the aircraft, determining a transition location in advance of the aircraft for transitioning between the at least one of the route corridor and the passing corridor to the other one of the route corridor and the passing corridor based at least in part on a first location of the aircraft, a second location of a second aircraft within the route corridor and a relative speed difference between the aircraft and the second aircraft, and providing, on the GUI display on the display device, a graphical indication of the transition location.

In another embodiment, an apparatus for a non-transitory computer-readable medium is provided. Computer-executable instructions stored on the computer-readable medium, when executed by a processing system, cause the processing system to provide, on a display device, a GUI display including a first graphical representation of a planned route of travel for a vehicle and a second graphical representation of the vehicle operating in a passing corridor adjacent to a route corridor encompassing at least a portion of the planned route of travel, identify a merge location within the passing corridor for returning to the planned route of travel within the route corridor based at least in part on a relationship between a first location of the vehicle within the passing corridor and a second location of a second vehicle within the route corridor, and provide, on the GUI display on the display device, a graphical indication of the merge location within the passing corridor.

This summary is provided to describe select concepts in a simplified form that are further described in the Detailed Description. This summary is not intended to identify key or essential features of the claimed subject matter, nor is it intended to be used as an aid in determining the scope of the claimed subject matter.

### BRIEF DESCRIPTION OF DRAWINGS

Exemplary embodiments of the subject matter of the present disclosure will hereinafter be described in conjunction with the following drawing figures, wherein like numerals denote like elements, and wherein:
FIG. 1 is a block diagram of a system for an aircraft in accordance with one or more exemplary embodiments;
FIG. 2 is a flow diagram of a corridor navigation process suitable for implementation in connection with the aircraft system of FIG. 1 in one or more exemplary embodiments;
FIGS. 3-6 depict an exemplary sequence of graphical user interface (GUI) displays suitable for presentation on a display device associated with an aircraft in connection with the corridor navigation process of FIG. 2; and
FIG. 7 depicts another exemplary GUI display suitable for presentation on a display device associated with an aircraft in connection with the corridor navigation process of FIG. 2.

### DETAILED DESCRIPTION

The following detailed description is merely exemplary in nature and is not intended to limit the subject matter of the application and uses thereof. Furthermore, there is no intention to be bound by any expressed or implied theory presented in the preceding technical field, background, brief summary, or the following detailed description.

Embodiments of the subject matter described herein relate to systems and methods for providing assisting pilots or other operators of urban air mobility (UAM) vehicles, unmanned aerial vehicles (UAVs), vertical takeoff and landing (VTOL) aircraft or other aircraft operating within defined corridors when passing or otherwise overtaking other air traffic. In this regard, a corridor generally represents a finite three-dimensional volume of space, which may be defined by a governmental or regulatory organization, such as, for example, the Federal Aviation Administration (FAA) in the United States. For example, in some implementations, the corridors may be realized as UAM corridor defined by the FAA, which represents a type of airspace volume within which cooperatively managed operations can occur, where air traffic control (ATC) ensures separation of non-participating aircraft from the operations within the corridor. That said, it should be appreciated that the subject matter described herein is not necessarily limited to any particular type of corridor and may be implemented in an equivalent manner in the context of any suitable finite volume of airspace, which may be controlled or uncontrolled, managed or unmanaged. Furthermore, although the subject matter is described herein primarily in the context of aircraft operating within three-dimensional volumes of airspace, the subject matter is not necessarily limited to use with aircraft and may be implemented in an equivalent manner for other types of vehicles (e.g., automotive vehicles, marine vessels, or the like) and/or other types of corridors, which may be two-dimensional (e.g., for surface operations on land or water) or three-dimensional (e.g., for underwater operations).

Exemplary embodiments described herein provide a graphical user interface (GUI) display that assists a pilot or other operator traversing between adjacent corridors to pass or otherwise overtake aircraft operating within a corridor that encompasses a planned route of travel for the ownship aircraft. For example, route corridors or airways may be defined that facilitate travel in defined directions between different locations while avoiding obstacles or other air traffic traveling in different directions. In this regard, route corridors may be realized as distinct volumes of airspace having a defined direction for travel therein along the length of the respective corridor that do not intersect or overlap one another in three-dimensions. Adjacent to a route corridor, a passing corridor may be defined for an aircraft to temporarily enter the passing corridor for purposes of passing or overtaking another aircraft within an adjacent route corridor. Depending on the implementation, the passing corridor may accommodate directional or bidirectional traffic, and may be laterally and/or vertically adjacent to a route corridor. For example, in some implementations, a bidirectional passing corridor may be defined between directional route corridors for traffic traveling in opposite directions to allow bidirectional travel of aircraft from one of the adjacent route corridors.

To assist a pilot or other operator of an aircraft deviating from a planned route of travel into a passing corridor to pass or otherwise overtake traffic within a route corridor encompassing the planned route of travel, the subject matter described herein that provides a navigational map GUI display that includes a graphical representation of the flight plan or other planned route of travel for the aircraft along with graphical indicia of the respective corridors and a graphical representation of the current position of the ownship aircraft with respect to planned route. In this regard, when the ownship aircraft is operating within a passing corridor adjacent to a route corridor encompassing at least a portion of the planned route depicted on the GUI display, aircraft symbology or another graphical representation of the aircraft may be presented on the GUI display disposed along a graphical representation of a passing route segment corresponding to a longitudinal axis of the passing corridor that is presented concurrently with the displayed portion of the planned route. One or more graphical indicia of potential merge locations identified for the aircraft are displayed along the passing route segment to provide situational awareness of the respective locations within the passing corridor where the aircraft can safely return to the planned route of travel within the route corridor based on the respective locations or positions of other aircraft traveling within the route corridor. Additionally, graphical indicia of one or more avoidance zones may be provided to provide situational awareness of the respective locations within the passing corridor where the aircraft should not attempt to return to the planned route of travel within the route corridor based on the other aircraft traveling within the route corridor. Thus, a pilot or other operator may utilize the GUI display to identify when and where the aircraft should exit the passing corridor to return to the planned route of travel.

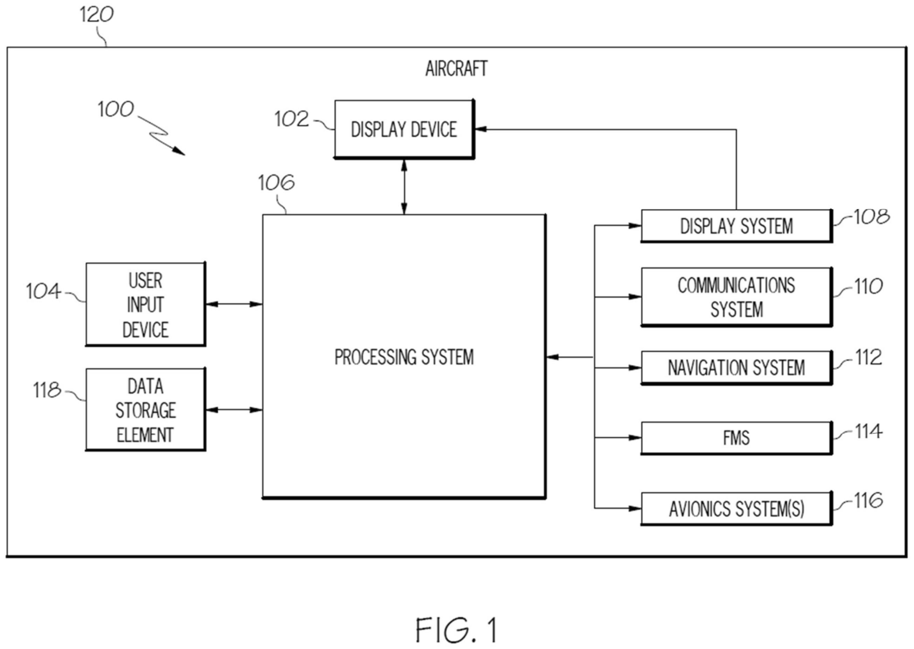

FIG. 1 depicts an exemplary embodiment of an aircraft system 100 which may be utilized with an aircraft 120. In an exemplary embodiment, the system 100 includes, without limitation, a display device 102, one or more user input devices 104, a processing system 106, a display system 108, a communications system 110, a navigation system 112, a flight management system (FMS) 114, one or more avionics systems 116, and a data storage element 118 suitably configured to support operation of the system 100, as described in greater detail below.

In exemplary embodiments, the display device 102 is realized as an electronic display capable of graphically displaying flight information or other data associated with operation of the aircraft 120 under control of the display system 108 and/or processing system 106. In this regard, the display device 102 is coupled to the display system 108 and the processing system 106, and the processing system 106 and the display system 108 are cooperatively configured to display, render, or otherwise convey one or more graphical representations or images associated with operation of the aircraft 120 on the display device 102. The user input device 104 is coupled to the processing system 106, and the user input device 104 and the processing system 106 are cooperatively configured to allow a user (e.g., a pilot, co-pilot, or crew member) to interact with the display device 102 and/or other elements of the system 100, as described in greater detail below. Depending on the embodiment, the user input device(s) 104 may be realized as a keypad, touchpad, keyboard, mouse, touch panel (or touchscreen), joystick, knob, line select key or another suitable device adapted to receive input from a user. In some exemplary embodiments, the user input device 104 includes or is realized as an audio input device, such as a microphone, audio transducer, audio sensor, or the like, that is adapted to allow a user to provide audio input to the system 100 in a "hands free" manner using speech recognition.

The processing system 106 generally represents the hardware, software, and/or firmware components configured to facilitate communications and/or interaction between the elements of the system 100 and perform additional tasks and/or functions to support operation of the system 100, as described in greater detail below. Depending on the embodiment, the processing system 106 may be implemented or realized with a general purpose processor, a content addressable memory, a digital signal processor, an application specific integrated circuit, a field programmable gate array, any suitable programmable logic device, discrete gate or transistor logic, processing core, discrete hardware components, or any combination thereof, designed to perform the functions described herein. The processing system 106 may also be implemented as a combination of computing devices, e.g., a plurality of processing cores, a combination of a digital signal processor and a microprocessor, a plurality of microprocessors, one or more microprocessors in conjunction with a digital signal processor core, or any other such configuration. In practice, the processing system 106 includes processing logic that may be configured to carry out the functions, techniques, and processing tasks associated with the operation of the system 100, as described in greater detail below. Furthermore, the steps of a method or algorithm described in connection with the embodiments disclosed herein may be embodied directly in hardware, in firmware, in a software module executed by the processing system 106, or in any practical combination thereof. For example, in one or more embodiments, the processing system 106 includes or otherwise accesses a data storage element (or memory), which may be realized as any sort of non-transitory short- or long-term storage media capable of storing programming instructions for execution by the processing system 106. The code or other computer-executable programming instructions, when read and executed by the processing system 106, cause the processing system 106 to support or otherwise perform certain tasks, operations, functions, and/or processes described herein.

The display system 108 generally represents the hardware, software, and/or firmware components configured to control the display and/or rendering of one or more navigational maps and/or other displays pertaining to operation of the aircraft 120 and/or onboard systems 110, 112, 114, 116 on the display device 102. In this regard, the display system 108 may access or include one or more databases suitably configured to support operations of the display system 108, such as, for example, a terrain database, an obstacle database, a navigational database, a geopolitical database, an airport database, a terminal airspace database, a special use airspace database, or other information for rendering and/or displaying navigational maps and/or other content on the display device 102.

In the illustrated embodiment, the aircraft system 100 includes a data storage element 118, which is capable of storing, maintaining or otherwise implementing one or more of the databases that support operations of the aircraft system 100 described herein. In some embodiments, the data storage element 118 contains aircraft procedure information (or instrument procedure information) for a plurality of airports and maintains association between the aircraft procedure information and the corresponding airports. Depending on the embodiment, the data storage element 118 may be physically realized using RAM memory, ROM memory, flash memory, registers, a hard disk, or another suitable data storage medium known in the art or any suitable combination thereof. As used herein, aircraft procedure information should be understood as a set of operating parameters, constraints, or instructions associated with a particular aircraft action (e.g., approach, departure, arrival, climbing, and the like) that may be undertaken by the aircraft 120 at or in the vicinity of a particular airport. An airport should be understood as referring to any sort of location suitable for landing (or arrival) and/or takeoff (or departure) of an aircraft, such as, for example, airports, runways, landing strips, and other suitable landing and/or departure locations, and an aircraft action should be understood as referring to an approach (or landing), an arrival, a departure (or takeoff), an ascent, taxiing, or another aircraft action having associated aircraft procedure information. An airport may have one or more predefined aircraft procedures associated therewith, wherein the aircraft procedure information for each aircraft procedure at each respective airport are maintained by the data storage element 118 in association with one another.

Depending on the embodiment, the aircraft procedure information may be provided by or otherwise obtained from a governmental or regulatory organization, such as, for example, the Federal Aviation Administration in the United States. In an exemplary embodiment, the aircraft procedure information includes instrument procedure information, such as instrument approach procedures, standard terminal arrival routes, instrument departure procedures, standard instrument departure routes, obstacle departure procedures, or the like, traditionally displayed on a published charts, such as Instrument Approach Procedure (IAP) charts, Standard Terminal Arrival (STAR) charts or Terminal Arrival Area (TAA) charts, Standard Instrument Departure (SID) routes, Departure Procedures (DP), terminal procedures, approach plates, and the like. In exemplary embodiments, the data storage element 118 maintains associations between prescribed operating parameters, constraints, and the like and respective navigational reference points (e.g., waypoints, positional fixes, radio ground stations (VORs, VORTACs, TACANs, and the like), distance measuring equipment, non-directional beacons, or the like) defining the aircraft procedure, such as, for example, altitude minima or maxima, minimum and/or maximum speed constraints, RTA constraints, and the like.

In exemplary embodiments described herein, the data storage element 118 stores or otherwise maintains corridor information corresponding to the respective volumes of airspace available for navigation within a geographic region defined by a governmental or regulatory organization associated with that geographic region. In this regard, the corridor information for each respective corridor may include identification of a first waypoint or other navigational reference point defining a first longitudinal end of the corridor (e.g., a particular latitude and longitude combination with an associated altitude or range of altitudes), a second waypoint or other navigational reference point defining the opposing longitudinal end of the corridor, a lateral width or other lateral dimension of the corridor (e.g., 100-200 feet), and a vertical height or altitude range defining a vertical dimension of the corridor (e.g., 100-200 feet) that cooperatively define the three-dimensional volume of airspace associated with the respective corridor. Additionally, the corridor information may include additional procedural information, rules or other criteria regulating operations within the three-dimensional volume of airspace, including, but not limited to, designation of a corridor usage type associated with the corridor (e.g., a route corridor versus a passing corridor), a directionality associated with the corridor (e.g., whether traffic within the corridor is directional or bidirectional), a minimum separation distance between air traffic within the corridor, and potentially other criteria pertaining to conflict management, airspace usage, flow management, and/or the like. In this regard, the corridor information generally defines a substantially rectangular or trapezoidal prism of airspace within which the aircraft 120 may operate subject to the additional procedural information, rules or other criteria associated with the respective corridor.

Still referring to FIG. 1, in exemplary embodiments, the processing system 106 is coupled to the navigation system 112, which is configured to provide real-time navigational data and/or information regarding operation of the aircraft 120. The navigation system 112 may be realized as a global positioning system (GPS), inertial reference system (IRS), or a radio-based navigation system (e.g., VHF omni-directional radio range (VOR) or long range aid to navigation (LORAN)), and may include one or more navigational radios or other sensors suitably configured to support operation of the navigation system 112, as will be appreciated in the art. The navigation system 112 is capable of obtaining and/or determining the instantaneous position of the aircraft 120, that is, the current (or instantaneous) location of the aircraft 120 (e.g., the current latitude and longitude) and the current (or instantaneous) altitude or above ground level for the aircraft 120. The navigation system 112 is also capable of obtaining or otherwise determining the heading of the aircraft 120 (i.e., the direction the aircraft is traveling in relative to some reference). In the illustrated embodiment, the processing system 106 is also coupled to the communications system 110, which is configured to support communications to and/or from the aircraft 120. For example, the communications system 110 may support communications between the aircraft 120 and air traffic control or another suitable command center or ground location. In this regard, the communications system 110 may be realized using a radio communication system and/or another suitable data link system. In this regard, various embodiments of the communications system 110 hardware and/or other components configured to support data link communications to/from the aircraft 120 using a data link infrastructure and/or a data link service provider.

In exemplary embodiments, the processing system 106 is also coupled to the FMS 114, which is coupled to the navigation system 112, the communications system 110, and one or more additional avionics systems 116 to support navigation, flight planning, and other aircraft control functions in a conventional manner, as well as to provide real-time data and/or information regarding the operational status of the aircraft 120 to the processing system 106. Although FIG. 1 depicts a single avionics system 116, in practice, the system 100 and/or aircraft 120 will likely include numerous avionics systems for obtaining and/or providing real-time flight-related information that may be displayed on the display device 102 or otherwise provided to a user (e.g., a pilot, a co-pilot, or crew member). For example, practical embodiments of the system 100 and/or aircraft 120 will likely include one or more of the following avionics systems suitably configured to support operation of the aircraft 120: a weather system, an air traffic management system, a radar system, a traffic avoidance system, a broadcast system (e.g., Automated Terminal Information Service (ATIS), an Automatic Dependent Surveillance-Broadcast (ADS-B) system, or the like),_an autopilot system, an autothrust system, a flight control system, hydraulics systems, pneumatics systems, environmental systems, electrical systems, engine systems, trim systems, lighting systems, crew alerting systems, electronic checklist systems, an electronic flight bag and/or another suitable avionics system.

It should be understood that FIG. 1 is a simplified representation of the system 100 for purposes of explanation and ease of description, and FIG. 1 is not intended to limit the application or scope of the subject matter described herein in any way. It should be appreciated that although FIG. 1 shows the display device 102, the user input device 104, and the processing system 106 as being located onboard the aircraft 120 (e.g., in the cockpit), in practice, one or more of the display device 102, the user input device 104, and/or the processing system 106 may be located outside the aircraft 120 (e.g., on the ground as part of an air traffic control center or another command center) and communicatively coupled to the remaining elements of the system 100 (e.g., via a data link and/or communications system 110). Similarly, in some embodiments, the data storage element 118 may be located outside the aircraft 120 and communicatively coupled to the processing system 106 via a data link and/or communications system 110. Furthermore, practical embodiments of the system 100 and/or aircraft 120 will include numerous other devices and components for providing additional functions and features, as will be appreciated in the art. In this regard, it will be appreciated that although FIG. 1 shows a single display device 102, in practice, additional display devices may be present onboard the aircraft 120. Additionally, it should be noted that in other embodiments, features and/or functionality of processing system 106 described herein can be implemented by or otherwise integrated with the features and/or functionality provided by the FMS 114. In other words, some embodiments may integrate the processing system 106 with the FMS 114. In yet other embodiments, various aspects of the subject matter described herein may be implemented by or at an electronic flight bag (EFB) or similar electronic device that is communicatively coupled to the processing system 106 and/or the FMS 114. In this regard, in the context of a UAV or other unmanned or remotely operated aircraft, the display device 102, the user input device 104 and/or the processing system 106 or functionality associated therewith may be implemented by or at a remote control device external to the aircraft 120 (e.g., as part of a remote control device that wirelessly communicates with the aircraft system 100). Thus, although the subject matter may be described primarily in the context of an implementation onboard the aircraft 120, the subject matter may be implemented in an equivalent manner at a remote control device or other external computing device for autonomously or remotely controlled aircraft.

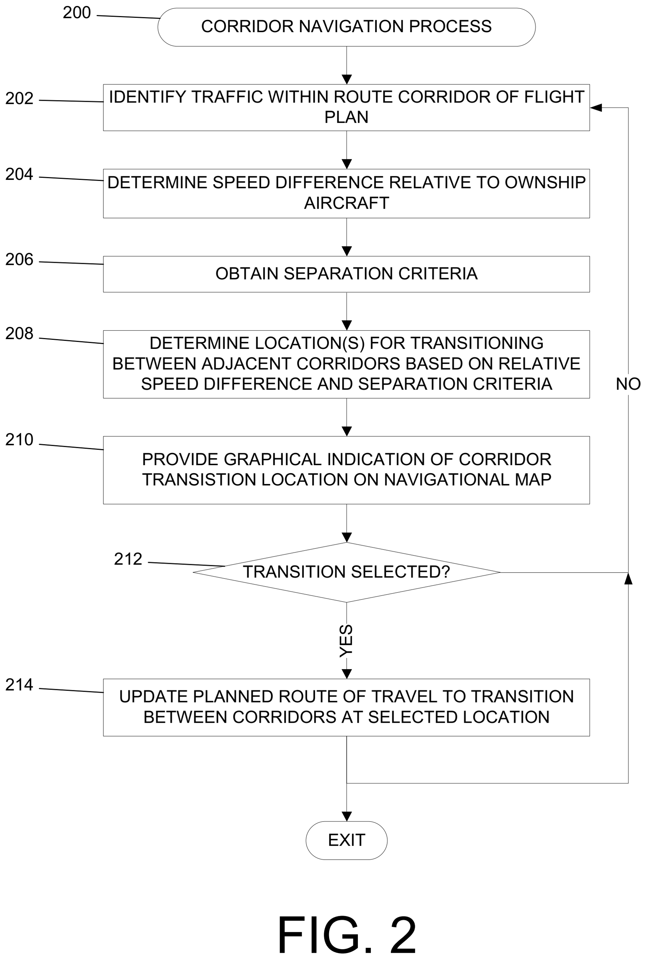

FIG. 2 depicts an exemplary embodiment of a corridor navigation process 200 suitable for implementation by the aircraft system 100 to assist a pilot or other aircraft operator navigating between laterally adjacent or vertically adjacent corridors for purposes of passing, overtaking, circumventing or otherwise navigating an aircraft 120 with respect to other air traffic within a corridor encompassing a planned route for the aircraft 120. The various tasks performed in connection with the illustrated process may be implemented using hardware, firmware, software executed by processing circuitry, or any combination thereof. For illustrative purposes, the following description may refer to elements mentioned above in connection with FIG. 1. In practice, portions of the corridor navigation process 200 may be performed by different elements of a vehicle system. That said, exemplary embodiments are described herein in the context of the corridor navigation process 200 being primarily performed by a corridor management service at a processing system 106 or FMS 114. It should be appreciated that the corridor navigation process 200 may include any number of additional or alternative tasks, the tasks need not be performed in the illustrated order and/or the tasks may be performed concurrently, and/or corridor navigation process 200 may be incorporated into a more comprehensive procedure or process having additional functionality not described in detail herein. Moreover, one or more of the tasks shown and described in the context of FIG. 2 could be omitted from a practical embodiment of the corridor navigation process 200 as long as the intended overall functionality remains intact.

Referring to FIG. 2 with continued reference to FIG. 1, in exemplary implementations, the corridor navigation process 200 is performed during operation of the aircraft 120 to detect or otherwise identify potentially impeding traffic within a route corridor that encompasses or otherwise corresponds to at least a portion of a planned route of travel corresponding to a flight plan for the aircraft (task 202). For example, during execution of the flight plan, a corridor management service at the processing system 106 or FMS 114 may monitor broadcast ADS-B data, radar data and/or other air traffic data provided by one or more onboard avionics systems 116 to detect or otherwise identify the presence of another aircraft operating ahead of the ownship aircraft 120 within a route corridor that encompasses an upcoming portion of the flight plan that is downpath of the current location of the aircraft 120.

In response to detecting traffic within the route corridor, the corridor navigation process 200 calculates or otherwise determines a speed difference between the current speed of the detected aircraft and the current speed of the ownship aircraft (task 204). For example, ADS-B data or other data broadcast by a nearby aircraft may include indication of the current speed the aircraft. The corridor management service may receive or otherwise obtain the current speed of the ownship aircraft 120 from the navigation system 112, the FMS 114 or another onboard system 116 and then calculate or otherwise determine the relative speed of the detected traffic aircraft in relation to the ownship aircraft 120.

Still referring to FIG. 2, the corridor navigation process 200 obtains one or more separation criteria associated with the route corridor, calculates or otherwise determines a location for transitioning to an adjacent passing corridor based on the relative speed difference and generates or otherwise provides graphical indication of the corridor transition location on a navigational map GUI display (tasks 206, 208, 210). For example, as described above, the data storage element 118 may maintain minimum separation distance and potential other criteria that the ownship aircraft 120 is required to adhere to when utilizing the route corridor along with other traffic. Based on the minimum separation distance and the relative speed of the aircraft in the route corridor ahead of the ownship aircraft 120, the corridor management service at the processing system 106 or FMS 114 calculates or otherwise determines a transition location along the current flight plan route within the route corridor for the ownship aircraft 120 deviating from the flight plan route to enter an adjacent passing corridor without violating the minimum separation distance or other usage criteria associated with the route channel. A corresponding graphical indication of the corridor transition location is provided on a navigational map GUI display to provide the pilot or other operator of the aircraft 120 with situational awareness of an upcoming location where it is recommended to initiate a passing maneuver via an adjacent corridor to overtake the impeding aircraft in the path of the aircraft 120 to maintain compliance with minimum separation requirements without having to reduce speed of the ownship aircraft 120.

Still referring to FIG. 2, in response to receiving a user selection or another indication from an operator to perform the corridor transition at the identified corridor transition location, the corridor navigation process 200 automatically updates the planned route of travel for the aircraft to incorporate a transition between adjacent corridors at the selected corridor transition location (tasks 212, 214). For example, a button or similar selectable GUI element may be provided on the navigational map GUI display that is selectable by a pilot or other operator to accept or otherwise adopt the suggested transition location identified by the corridor management service. In response, the corridor management service automatically updates the flight plan maintained at the FMS 114 to transition into an adjacent passing corridor at the corridor transition location, for example, by inserting one or more waypoints or pseudo-waypoints within the passing corridor into the flight plan after the corridor transition location and before one or more downpath waypoints in the flight plan. In this regard, the FMS 114 or other autopilot system 116 of the aircraft 120 may automatically and autonomously operate the aircraft 120 to deviate from the original flight plan route at the selected corridor transition location and enter the adjacent passing corridor.

In exemplary implementations, after entering the adjacent passing corridor, the loop defined by tasks 202, 204, 206, 208, 210 and 212 of the corridor navigation process 200 is repeated to dynamically determine another corridor transition location for subsequently transitioning from the passing corridor back to the flight plan route within a route corridor in a manner that satisfies separation criteria or other usage criteria associated with the route corridor and/or the passing corridor. For example, in a similar manner as described above, based on the relative speed difference between the ownship aircraft 120 traveling within the passing corridor and the other aircraft traveling within the route corridor, the corridor management service calculates or otherwise determines corridor transition location for exiting the passing corridor and merging back into the route corridor to resume travel along the flight plan route while ensuring the ownship aircraft 120 satisfies minimum separation with respect to the other aircraft within the route corridor. A corresponding graphical indication of the merge location is provided on a navigational map GUI display to provide the pilot or other operator of the aircraft 120 with situational awareness of an upcoming location where it is recommended to complete the passing maneuver and merge back to the original flight plan route within the adjacent route corridor after overtaking the previously impeding aircraft within the route corridor. The merge location may similarly be indicated with a button or similar selectable GUI element on the navigational map GUI display that is selectable by a pilot or other operator to accept or otherwise adopt the suggested merge location identified by the corridor management service and automatically update the flight plan maintained at the FMS 114 to transition from the passing corridor back to the route corridor at the merge location, such that the FMS 114 or other autopilot system 116 of the aircraft 120 may automatically and autonomously operate the aircraft 120 to return to the original flight plan route at the selected merge location.

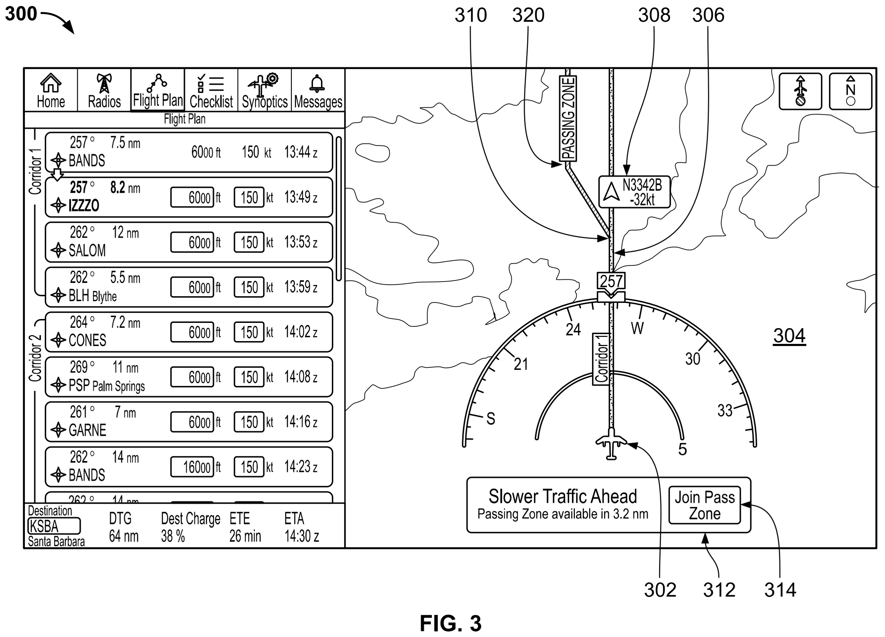

FIGS. 3-6 depict an exemplary sequence of navigational map GUI displays that may be displayed, rendered, or otherwise presented by the processing system 106 and/or display system 108 on a display device 102 associated with an aircraft 120 in accordance with one or more exemplary implementations of the corridor navigation process 200 of FIG. 2. In this regard, FIG. 3 depicts an initial state of a navigational map GUI display 300 in response to identifying potentially impeding traffic within a route corridor of a flight plan for the aircraft 120. The navigational map GUI display 300 includes a graphical representation 302 of the aircraft 120 and a graphical representation of a portion of the route 306 defined by a flight plan for the aircraft 120. The aircraft symbology 302 and the graphical representation of the route 306 are overlaid or rendered on top of a background 304, which is generally realized as a graphical representation of the terrain, topology, navigational reference points, airspace designations and/or restrictions, or other suitable items or points of interest corresponding to the currently displayed area of the navigational map GUI display 300. For example, the display system 108 may utilize information maintained in a terrain database, a navigational database, a geopolitical database, or another suitable database to render graphical representations of the waypoints or other navigational aids (e.g., VORs, VORTACs, DMEs, and the like) of the flight plan that are within the currently displayed geographic area of the navigational map GUI display 300 and corresponding navigational route segments between the those waypoints of the current flight plan overlying the background 304. It should be noted that although FIG. 3 depicts a top view (e.g., from above the aircraft) of the navigational map GUI display 300 (alternatively referred to as a lateral map or lateral view), in practice, alternative embodiments may utilize various perspective views, such as side views, three-dimensional views (e.g., a three-dimensional synthetic vision display), angular or skewed views, and the like. Additionally, the subject matter described herein is not limited to lateral map displays depicting the horizontal situation of an aircraft, and in practice, may be implemented in an equivalent manner in the context of a vertical situation display or other vertical profile displays depicting the altitude or vertical situation of the aircraft.

In one or more exemplary embodiments, the navigational map GUI display 300 is associated with the movement of the aircraft 120, where background 304 refreshes or otherwise updates as the aircraft 120 travels, such that the graphical representation 302 of the aircraft 120 is positioned over the terrain background 304 in a manner that accurately reflects the current (e.g., instantaneous or substantially real-time) real-world positioning of the aircraft 120 relative to Earth. In this regard, FIGS. 3-6 depict an implementation where the aircraft symbology 302 is located at a fixed position on the navigational map GUI display 300 (e.g., by updating the background 304 with respect to the aircraft symbology such that the navigational map GUI display 300 is maintained centered on and/or aligned with the aircraft symbology 302), while in other implementations, the aircraft symbology 302 may be shown as traveling across the navigational map GUI display 300 (e.g., by updating the location of the aircraft symbology with respect to the background 304). For purposes of explanation, the subject matter may be described herein primarily in the context of an implementation where the navigational map GUI display 300 is oriented in a cardinal direction (e.g., oriented north-up so that moving upward on the navigational map GUI display 300 corresponds to traveling northward); however, in alternative implementations, the orientation of the navigational map GUI display 300 may be track-up or heading-up (i.e., aligned such that the aircraft symbology is always traveling in an upward direction and the background 304 adjusted accordingly).

As shown in FIG. 3, in response to detecting another aircraft within the route corridor that is traveling at a slower speed than the ownship aircraft 120, the corridor management service updates the navigational map GUI display 300 to include a graphical indication 308 of the potentially impeding aircraft within the same route corridor as the ownship aircraft 120 that encompasses the upcoming portion of the flight plan route 306. In this regard, the graphical indication 308 of the impeding aircraft may include a call sign or other identifier associated with the impeding aircraft (e.g., N3342B) along with a graphical representation of the relative speed difference associated with the impeding aircraft (e.g., -32 knots). Based on the relative speed difference between the aircraft, the current separation distance between the aircraft, and the separation criteria associated with the route corridor, the corridor management service calculates or otherwise determines a corridor transition location 310 along the flight plan route 306 for initiating a passing maneuver and provides one or more graphical indicia of the corridor transition location.

For example, as shown, the corridor management service may generate, render or otherwise provide a pop-up or similar user notification window 312 overlying the navigational map GUI display 300 that includes information identifying the presence of impeding traffic and an indication of the estimated distance to go between the current location of the aircraft 120 and the corridor transition location 310 (e.g., 3.2 nautical miles). Additionally, the corridor management service may generate or otherwise provide a graphical representation 320 of an alternative route segment representing a trajectory for deviating from the flight plan route 306 at the corridor transition location 310 and performing a passing maneuver within the adjacent passing corridor. In this regard, the alternative route 320 may be rendered using a color (e.g., white) or another visually distinguishable characteristic that is different from the color (e.g. magenta) or other visually distinguishable characteristic(s) (e.g., bolder or heavier line weight, etc.) utilizes to render the flight plan route 306 to facilitate visually differentiating the passing maneuver trajectory 320 from the flight plan route 306. In the illustrated implementations, the passing maneuver trajectory 320 includes one or more waypoints defining a 45° procedure turn laterally from the flight plan route 306 to be initiated at the corridor transition location 310 and a corresponding route segment that continues emanating from the corridor transition location 310 along that heading until intersecting the central longitudinal axis of the adjacent passing corridor, at which point the passing maneuver trajectory 320 continues the along the central longitudinal axis of the passing corridor. In this regard, the passing corridor generally runs parallel to the route corridor longitudinally but laterally (or vertically) offset from the route corridor by some separation distance to allow for passing air traffic, with the passing maneuver trajectory 320 including one or more waypoints defining a lateral trajectory for rejoining the flight plan route 306 within the route corridor from the corridor transition location 310.

As shown in FIG. 3, the corridor management service may generate, render or otherwise provide a button or similar selectable GUI element 314 that is manipulable by a pilot or other operator to incorporate the proposed alternative route 320 for deviating from the flight plan route 306 at the identified corridor transition location 310. In response to selection of the button 314 to enter the laterally adjacent passing corridor at the identified corridor transition location 310, the corridor management service may automatically update the flight plan maintained at the FMS 114 to include one or more waypoints, pseudo-waypoints, radar vectors or other information defining the proposed alternative route 320 upon reaching the corridor transition location 310. Thereafter, the FMS 114, autopilot system 116 or other autonomous functionality associated with the aircraft 120 may automatically and autonomously operate the aircraft 120 to deviate from the flight plan route 306 upon reaching or otherwise traversing the corridor transition location 310 to enter the adjacent passing corridor and initiate a passing maneuver to overtake the impeding aircraft 308.

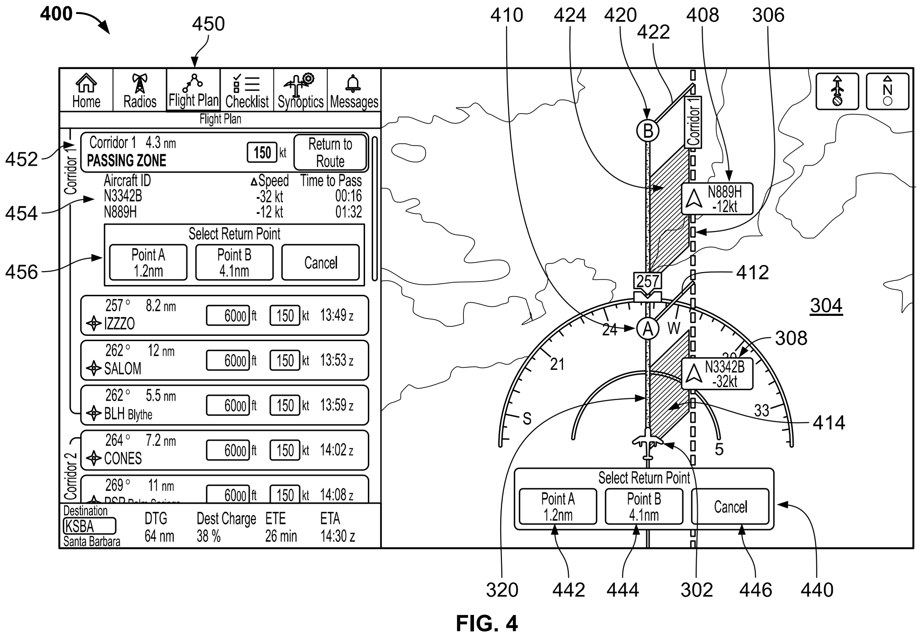

FIG. 4 depicts an updated navigational map GUI display 400 that may be displayed, rendered, or otherwise presented by the processing system 106 and/or display system 108 on the display device 102 after the aircraft 120 has transitioned from the route corridor to the adjacent passing corridor and is flying along the alternative trajectory 320 in lieu of the original flight plan route 306. In this regard, the alternative route 320 may be rendered using the color (e.g. magenta) or other visually distinguishable characteristic(s) (e.g., bolder or heavier line weight, etc.) that indicates that the alternative route 320 corresponds to the active leg or other portion of the updated flight plan currently being flown by the aircraft 120, while the portion of the original flight plan route 306 within the route corridor being bypassed by the alternative route 320 may be rendered using another color (e.g., white) or other visually distinguishable characteristics (e.g., dashing) to indicate it is not currently part of the active leg of the flight plan.

Referring to FIG. 4 with reference to FIG. 2, while traveling in the passing corridor, the corridor management service continually performs the corridor navigation process 200 to assist the pilot or other operator in returning to the original flight plan route 306 within the route corridor. In this regard, based on the relative speed difference between the ownship aircraft 120 and the impeding aircraft 308 being passed, the distance between two aircraft (or their relative locations), and the separation criteria associated with the route corridor, the corridor management service calculates or otherwise determines a merge location for transitioning back to the route corridor and merging with the original flight plan route 306 that satisfies the minimum separation distance between the ownship aircraft 120 and the other aircraft 308 being passed (e.g., task 208). The corridor management service provides a corresponding graphical indication 410 of the calculated merge location along the alternative route 320 within the passing corridor and a graphical representation of an updated alternative trajectory 412 for transitioning from the passing corridor to the route corridor at the merge location to intercept, resume or otherwise merge with the original flight plan route 306 after the merge location (e.g., by initiating a 45° procedure turn from the merge location 410 towards the adjacent route corridor and a corresponding route segment along that heading until intercepting the flight plan route 306). In this regard, the updated alternative trajectory 412 includes one or more waypoints defining a route segment for returning to the original flight plan route 306 at a predicted time in the future when the aircraft 120 is expected to reach or otherwise traverse the merge location 410 that is predicted to maintain the threshold minimum separation distance between the ownship aircraft 120 and the other aircraft 308 that was previously impeding the ownship aircraft 120 along the original flight plan route 306.

In a similar manner as described above, the corridor management service also generates, renders or otherwise provides user notification 440 of the calculated merge location that includes a button or similar selectable GUI element 442 that is manipulable by a pilot or other operator to incorporate the proposed alternative route 412 from the identified merge location 410 back to the original flight plan route 306 within the route corridor. Additionally, in exemplary implementations, the corridor management service generates, renders or otherwise provides a graphical indication 414 of an avoidance zone between the graphical representations of the current alternative route 320 and the original flight plan route 306 that corresponds to the portion or segment of the alternative route 320 within which the aircraft 120 is unable to merge or otherwise transition from the passing corridor back to the route corridor without violating separation criteria or other usage criteria associated with the route corridor based on the current relative speed difference between the impeding aircraft being passed. In this manner, the corridor management service provides situational awareness of the merge location 410 and corresponding trajectory 412 for which the aircraft 120 is capable of merging from the passing corridor to the adjacent route corridor to intercept or otherwise resume the original flight plan route 306 while also providing situational awareness of the regions along the alternative route 320 where the aircraft 120 risks violating separation criteria or other usage criteria if the pilot or operator were to attempt to merge back into the route corridor within those regions.

It should be noted that FIG. 4 depicts an exemplary scenario where the corridor management service detects more than one potentially impeding aircraft within the route corridor (e.g., at task 202). In this regard, for the next downpath impeding aircraft identified by the corridor management service, the corridor management service may similarly calculate or otherwise determine the relative speed difference associated with the next downpath impeding aircraft (e.g., at task 204) and providing corresponding graphical indication 408 of the impeding aircraft that includes the call sign or other identifier associated with the impeding aircraft (e.g., N889H) along with a graphical representation of the relative speed difference associated with the impeding aircraft (e.g., -12 knots). Based on the relative speed difference between the ownship aircraft 120 and the impeding aircraft 408, the distance between two aircraft (or their relative locations), and the separation criteria associated with the route corridor, the corridor management service calculates or otherwise determines a second downpath merge location for transitioning back to the route corridor and merging with the original flight plan route 306 that satisfies the minimum separation distance between the ownship aircraft 120 and the other aircraft 408 after passing both aircraft 308, 408 (e.g., task 208).

The corridor management service provides a corresponding graphical indication 420 of the calculated merge location along the alternative route 320 within the passing corridor and a graphical representation of another alternative trajectory 422 for transitioning from the passing corridor to the route corridor at the merge location to intercept, resume or otherwise merge with the original flight plan route 306 after passing both aircraft 308, 408 and traversing the downpath merge location 420. In this regard, the user notification 440 may include an additional button 444 for incorporating the proposed alternative route 422 from the identified downpath merge location 420 back to the original flight plan route 306 within the route corridor. Additionally, in exemplary implementations, the corridor management service generates, renders or otherwise provides avoidance zone symbology 424 between the alternative route 320 and the original flight plan route 306 to provide situational awareness of regions along the alternative route 320 where the aircraft 120 risks violating separation criteria or other usage criteria if the pilot or operator were to attempt to merge back into the route corridor after traversing the prior merge location 410 but prior to passing the next downpath aircraft 408.

FIG. 4 also depicts an updated state of a waypoint list GUI display 450 that may be concurrently presented with the navigational map GUI display 400. The waypoint list GUI display 450 includes a listing of the waypoints or other navigational reference points and corresponding route corridors associated with the flight plan for the aircraft 120. In this regard, in response to the aircraft 120 traversing the transition location 310 and traversing along the alternative route 320, the waypoint list GUI display 450 may be updated to include a graphical indication 452 of the alternative route 320 within the passing corridor as the active leg or waypoint currently being flown by the aircraft 120 followed by the downpath waypoints of the original flight plan route 306 that follow the longitudinal end of the passing corridor. As shown, the waypoint list GUI display 450 may include graphical indicia 454 of the potentially impeding aircraft detected within the route corridor (e.g., "Corridor 1") that would otherwise correspond to the current portion of the original flight plan route 306 currently being flown along information identifying the relative speed difference associated with the respective aircraft and an estimated amount of time required to pass a respective aircraft based on the relative speed difference and the relative locations or distance between aircraft. Beneath the passing corridor indicia 452, the corridor management service may generate, render or otherwise provide a duplicate or redundant user notification 456 that includes graphical indicia of the identified merge locations 410, 420 and selectable buttons for incorporating a respective one of the merge locations 410, 420 into the flight plan.

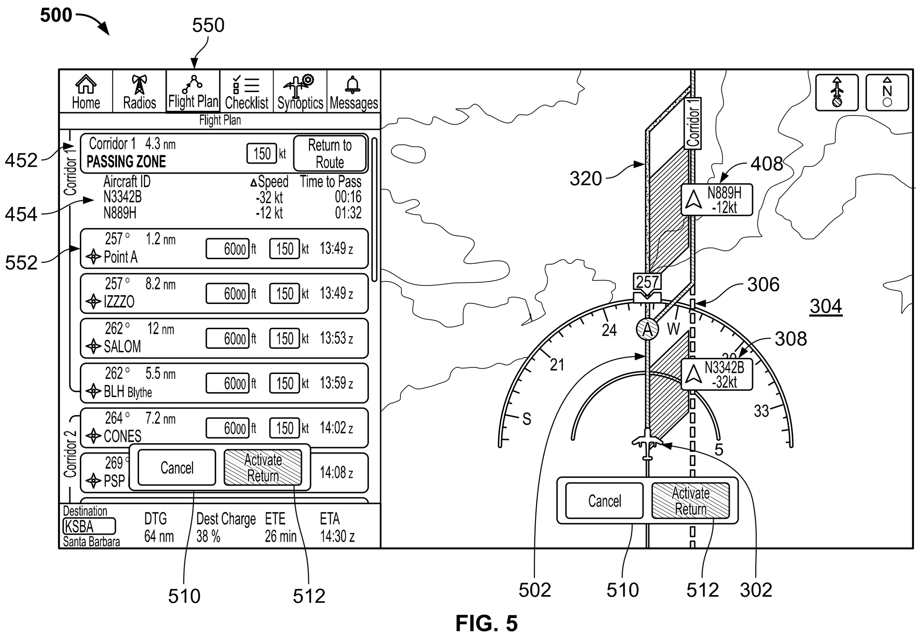

Referring to FIG. 5, in response to selection of the button 442 to add the merge location 410 and associated merging trajectory 412 to the route currently being flown, the corridor management service may update the navigational map GUI display 500 to include an updated graphical representation 502 of an alternative route for passing the impeding aircraft 308 and merging to rejoin the original flight plan route 306 from the merge location 410. In this regard, the updated alternative route 502 may be rendered using a color (e.g., cyan) or other visually distinguishable characteristic that indicates a conditional or tentative state of the updated alternative route 502 relative to the other routes 306, 320 concurrently depicted on the navigational map GUI display 500. Additionally, the corridor management service may update waypoint list GUI display 550 to include a graphical indication 552 of the selected merge location 410 as the next upcoming waypoint or leg of the flight plan currently being flown after the passing corridor indication 452. The updated GUI displays 500, 550 include respective instances of a user notification 510 that include a button 512 for confirming and activating the selected alternative trajectory 412 for merging or otherwise returning to the original flight plan route 306 from the selected merge location 410.

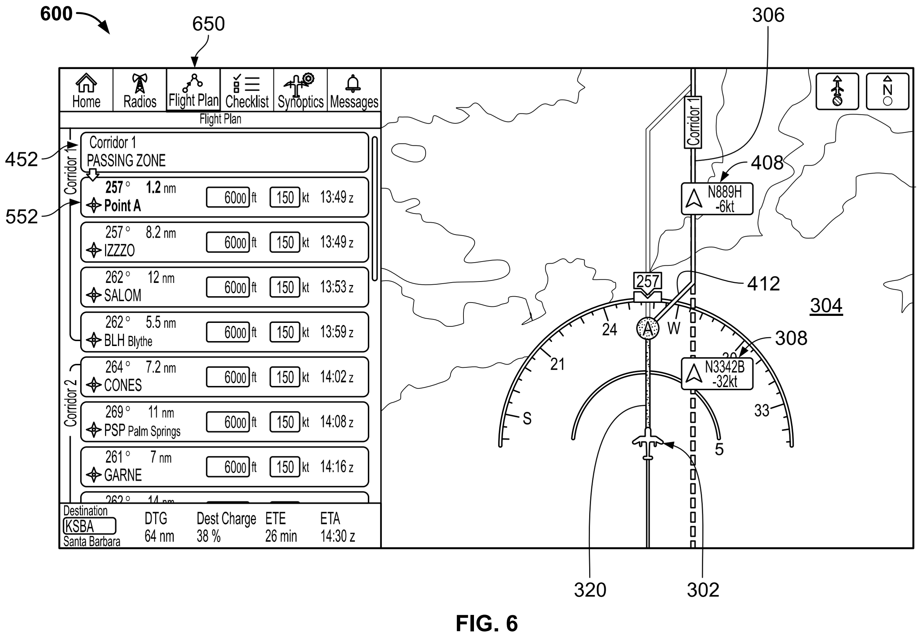

In response to selection of the button 512, the corridor management service may automatically update the flight plan maintained at the FMS 114 to include one or more waypoints, pseudo-waypoints, radar vectors or other information defining the merging trajectory 412 for rejoining the original flight plan route 306 upon reaching the merge location 410. In this regard, FIG. 6 depicts an updated navigational map GUI display 600 and correspondingly updated waypoint list GUI display 650 that reflects incorporation of the selected merge location 410 and corresponding trajectory 412 into the flight plan for the aircraft 120. As shown, the remaining portion of the alternative route 320 for passing the impeding aircraft 308 may be rendered using a color (e.g., magenta) or other visually distinguishable characteristic indicating that it is the active leg of the current flight plan, while the graphical representations of the merging trajectory 412 and downpath portions of the original flight plan route 306 may be rendered using corresponding colors and visually distinguishable characteristics (e.g., solid white lines) to indicate upcoming or downpath portions of the current flight plan to be flown. Thereafter, the FMS 114, autopilot system 116 or other autonomous functionality associated with the aircraft 120 may automatically and autonomously operate the aircraft 120 to complete execution of the passing maneuver prior to performing a merging maneuver to exit the passing corridor and intercept the original flight plan route 306 downpath of the impeding aircraft 308 upon reaching or otherwise traversing the selected merge location 410. In this manner, the corridor navigation process 200 assists a pilot or other operator of the aircraft 120 passing or otherwise overtaking an impeding aircraft while ensuring compliance with minimum separation requirements and other usage criteria and providing situational awareness with respect to neighboring air traffic and respective regions where separation requirements or other usage criteria may not be satisfied when transitioning between adjacent route and passing corridors.

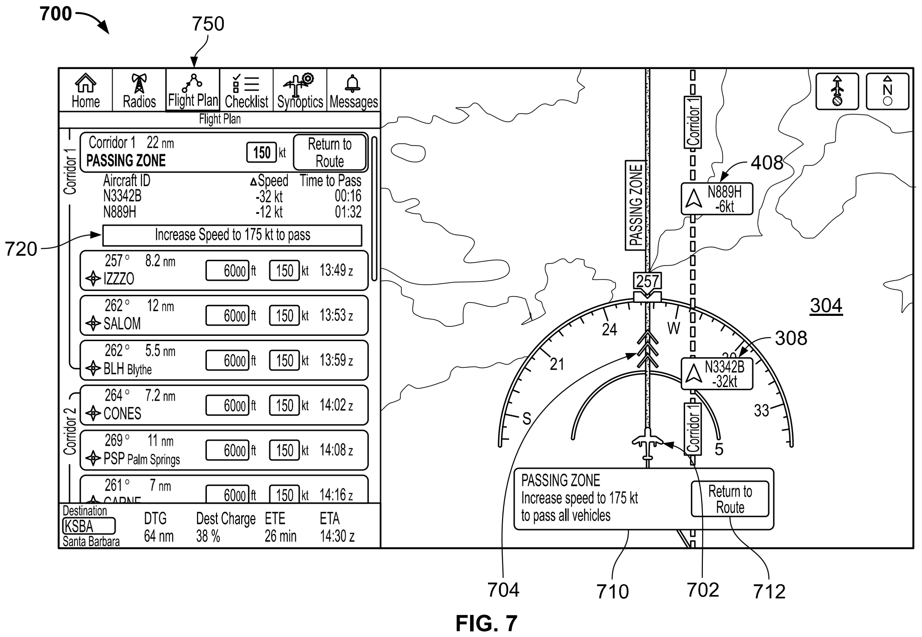

FIG. 7 depicts an exemplary navigational map GUI display 700 that may be displayed, rendered, or otherwise presented by the processing system 106 and/or display system 108 on a display device 102 associated with an aircraft 120 in connection with the corridor navigation process 200 of FIG. 2. In this regard, FIG. 7 depicts an updated state of the navigational map GUI display 700 when the ownship aircraft 120 is traveling within a passing corridor and the corridor navigation process 200 is unable to identify (e.g., at task 206) a transition location within the passing corridor for merging back to the original flight plan route 306 based on the current relative speed differences associated with the route corridor traffic without violating separation criteria or potentially other usage restrictions associated with the route corridor. When the corridor management service is unable to identify a merge location downpath of the ownship aircraft 120 within the passing corridor, the corridor management service generates, renders or otherwise provides a graphical indication 704 that indicates the speed of the aircraft 120 should be increased to complete execution of the passing maneuver. For example, as shown, a graphical indicator 704 to increase speed may be rendered in advance of the ownship aircraft symbology 702 along the graphical representation of the alternative route within the passing corridor.

In exemplary implementations, based on the current speed(s) of the detected traffic aircraft in the route corridor, the current speed of the ownship aircraft, the remaining length of the passing corridor, and the separation criteria associated with the adjacent route corridor, the corridor management service calculates or otherwise determines a minimum speed threshold for the ownship aircraft 120 to overtake the detected traffic aircraft in the route corridor and achieve a relative speed difference that would enable the corridor management service to identify a transition location for merging into the route corridor ahead of the detected traffic aircraft in the route corridor (e.g., at task 206). As shown, the corridor management service may generate, render or otherwise provide a user notification 710 on or overlying the navigational map GUI display 700 that indicates the minimum speed threshold. Additionally, in some implementations, the corridor management service also provides a user notification 720 that indicates the minimum speed threshold within the waypoint list GUI display 750 between the active leg within the passing corridor and the downpath waypoints of the original flight plan route 306 that follow the longitudinal end of the passing corridor in a similar manner as described above in the context of the identified merge location notification 456. In this manner, the corridor management service facilitates a pilot or other operator successfully completing execution of a passing maneuver in connection with the corridor navigation process 200 of FIG. 2.

For the sake of brevity, conventional techniques related to aircraft procedures, avionics systems, FMSs, flight planning, UAM aircraft, VTOL aircraft, UAVs, and other functional aspects of the systems (and the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of non-transitory storage medium known in the art. An exemplary storage medium is coupled to the processor such that the processor can read information from, and write information to, the storage medium. In the alternative, the storage medium may be integral to the processor. The processor and the storage medium may reside in an ASIC.

The subject matter may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "computer-readable medium", "processor-readable medium", or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

Some of the functional units described in this specification have been referred to as "modules" in order to more particularly emphasize their implementation independence. For example, functionality referred to herein as a module may be implemented wholly, or partially, as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like. Modules may also be implemented in software for execution by various types of processors. An identified module of executable code may, for instance, comprise one or more physical or logical modules of computer instructions that may, for instance, be organized as an object, procedure, or function. Nevertheless, the executables of an identified module need not be physically located together, but may comprise disparate instructions stored in different locations that, when joined logically together, comprise the module and achieve the stated purpose for the module. Indeed, a module of executable code may be a single instruction, or many instructions, and may even be distributed over several different code segments, among different programs, and across several memory devices. Similarly, operational data may be embodied in any suitable form and organized within any suitable type of data structure. The operational data may be collected as a single data set, or may be distributed over different locations including over different storage devices, and may exist, at least partially, merely as electronic signals on a system or network.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is logically coherent.

Furthermore, the foregoing description may refer to elements or nodes or features being "coupled" together. As used herein, unless expressly stated otherwise, "coupled" means that one element/node/feature is directly or indirectly joined to (or directly or indirectly communicates with) another element/node/feature, and not necessarily mechanically. For example, two elements may be coupled to each other physically, electronically, logically, or in any other manner, through one or more additional elements. Thus, although the drawings may depict one exemplary arrangement of elements directly connected to one another, additional intervening elements, devices, features, or components may be present in an embodiment of the depicted subject matter. In addition, certain terminology may also be used herein for the purpose of reference only, and thus are not intended to be limiting.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A method of assisting operation of a vehicle, the method comprising:
providing, on a display device, a graphical user interface (GUI) display comprising a first graphical representation of a planned route of travel for the vehicle and a second graphical representation of the vehicle operating in a passing corridor adjacent to a route corridor encompassing at least a portion of the planned route of travel;
identifying a merge location within the passing corridor for returning to the planned route of travel within the route corridor based at least in part on a relationship between a first location of the vehicle within the passing corridor and a second location of a second vehicle within the route corridor; and
providing, on the GUI display on the display device, a graphical indication of the merge location within the passing corridor.

2. The method of claim 1, further comprising:
determining an avoidance zone based at least in part on the relationship between the first location of the vehicle and the second location of the second vehicle and a threshold separation distance; and
providing, on the GUI display on the display device, a third graphical representation of the avoidance zone between the second graphical representation of the vehicle and the planned route of travel.

3. The method of claim 1, further comprising:
providing, on the GUI display on the display device, a selectable GUI element to add the merge location to the planned route of travel; and
in response to selection of the selectable GUI element, automatically updating the planned route of travel at an onboard system of the vehicle to include the merge location between the first location of the vehicle and a downpath waypoint associated with the planned route of travel.

4. The method of claim 1, further comprising:
providing, on the GUI display on the display device, a third graphical representation of a navigational segment between the first location of the vehicle and the merge location; and
providing, on the GUI display on the display device, a second graphical indication of an adjustment to a current speed of the vehicle proximate the third graphical representation of the navigational segment based at least in part on the relationship between the first location of the vehicle and the second location of the second vehicle and a second relationship between the current speed of the vehicle and a second speed of the second vehicle.

5. The method of claim 1, wherein identifying the merge location comprises calculating the merge location within the passing corridor based at least in part on the relationship between the first location of the vehicle and the second location of the second vehicle, a second relationship between a first speed of the vehicle and a second speed of the second vehicle, and a threshold separation distance.

6. The method of claim 5, wherein calculating the merge location comprises calculating the merge location resulting in a second navigational segment between the merge location and the portion of the planned route of travel predicted to maintain the threshold separation distance between the vehicle and the second vehicle at a predicted time for the vehicle returning to the planned route of travel along the second navigational segment.

7. The method of claim 1, wherein:
the route corridor comprises a first three-dimensional volume of space encompassing the portion of the planned route of travel; and
the passing corridor comprises a second three-dimensional volume of space adjacent to the first three-dimensional volume of space.

8. The method of claim 1, wherein:
the vehicle comprises an aircraft;
the planned route of travel comprises a flight plan for the aircraft; and
the second vehicle comprises a second aircraft.

9. The method of claim 1, wherein the vehicle comprises an urban air mobility (UAM) vehicle.

10. A computer-readable medium having computer-executable instructions stored thereon that, when executed by a processing system, cause the processing system to:
provide, on a display device, a graphical user interface (GUI) display comprising a first graphical representation of a planned route of travel for a vehicle and a second graphical representation of the vehicle operating in a passing corridor adjacent to a route corridor encompassing at least a portion of the planned route of travel;
identify a merge location within the passing corridor for returning to the planned route of travel within the route corridor based at least in part on a relationship between a first location of the vehicle within the passing corridor and a second location of a second vehicle within the route corridor; and
provide, on the GUI display on the display device, a graphical indication of the merge location within the passing corridor.

11. The computer-readable medium of claim 10, wherein the computer-executable instructions are configurable to cause the processing system to:
determine an avoidance zone based at least in part on the relationship between the first location of the vehicle and the second location of the second vehicle and a threshold separation distance; and
provide, on the GUI display on the display device, a third graphical representation of the avoidance zone between the second graphical representation of the vehicle and the planned route of travel.

12. The computer-readable medium of claim 10, wherein the computer-executable instructions are configurable to cause the processing system to:
provide, on the GUI display on the display device, a selectable GUI element to add the merge location to the planned route of travel; and
in response to selection of the selectable GUI element, automatically update the planned route of travel at an onboard system of the vehicle to include the merge location between the first location of the vehicle and a downpath waypoint associated with the planned route of travel.

13. The computer-readable medium of claim 10, wherein the computer-executable instructions are configurable to cause the processing system to:
provide, on the GUI display on the display device, a third graphical representation of a navigational segment between the first location of the vehicle and the merge location; and
provide, on the GUI display on the display device, a second graphical indication of an adjustment to a current speed of the vehicle proximate the third graphical representation of the navigational segment based at least in part on the relationship between the first location of the vehicle and the second location of the second vehicle and a second relationship between the current speed of the vehicle and a second speed of the second vehicle.

14. The computer-readable medium of claim 10, wherein the computer-executable instructions are configurable to cause the processing system to calculate the merge location within the passing corridor based at least in part on the relationship between the first location of the vehicle and the second location of the second vehicle, a second relationship between a first speed of the vehicle and a second speed of the second vehicle, and a threshold separation distance.

15. The computer-readable medium of claim 10, wherein the vehicle comprises an urban air mobility (UAM) vehicle.
